# EUROPEAN PATENT APPLICATION

(11) **EP 0 769 252 A1**
(43) Date of publication of application: **23.04.1997**
(21) Application number: 96307523.9
(22) Date of filing: 16.10.1996
(51) Int. Cl.: A23K 1/18

(54) **Pet food packed in container**

(30) Priority: 20.10.1995 JP 272476/95
(71) Applicant: UNI-CHARM CORPORATION, Kawanoe-shi Ehime-ken (JP)
(72) Inventor: Ohba, Naoki, Shizuoka-ken (JP); Iwasaki, Shinyou, Kakegawa-shi, Shizuoka-ken (JP); Matsuoka, Seiko, Kakegawa-shi, Shizuoka-ken (JP)
(74) Representative: Murgatroyd, Susan Elizabeth

(57) **Abstract**

A pet food packed in a hermetically sealed container (2) in which two or more types of food (A,B) prepared substantially from different materials are sorted within one and the same container (2).

## Description

The present invention relates generally to pet foods such as dog and cat foods packed in a hermetically sealed container.

So-called pet foods such as dog and cat foods are commercially available in the form of canned foods, the contents of which are of a substantially uniform composition. In this case, however, the contents are not always eaten by a pet to the last morsel and often left half-eaten. In addition, some pets are satiated with taking pet foods of the same type in repetition and consequently the contents left half-eaten must be wastefully thrown away.

In view of the problem as mentioned above, it is a principal object of the invention to provide a pet food packed in a container so improved that such pet food may be eaten by pets to the last morsel without satiating the pet with taking this in repetition.

The object set forth above is achieved, according to the invention, by a pet food packed in a hermetically sealed container, wherein two or more types of food prepared from substantially different materials are sorted within one and the same container.

The invention will be described in more detail by way of example with reference to the accompanying drawings, in which:-
Fig. 1 is a perspective view, partially broken away, showing a canned pet food with the lid of the can removed; and
Fig. 2 is a view similar to Fig. 1 showing an arrangement of the contents of the can which are different from that as seen in Fig. 1.

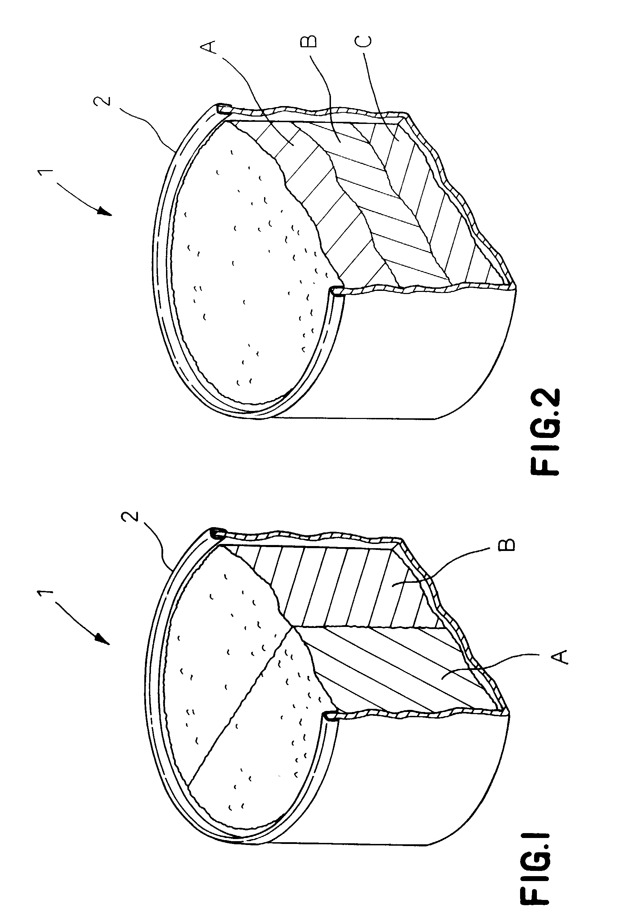

A canned product 1 with a lid thereof taken off, is shown by Fig. 1 in a perspective view as partially broken away and comprises two types of food A, B prepared from substantially different materials, respectively, occupying right and left halves of the volume or capacity of a can 2. As an example, a mass of type A food may comprise a substantially homogeneous mixture of beef processed by a meat chopper, gelatinizer, vitamin preparation, minerals, meat extract, water etc., and a mass of type B food may comprise a substantially homogeneous mixture of chicken and meat liver processed by a meat chopper, gelatinizer, minerals, meat extract, water etc. While these two masses of type A food and type B food are shown by Fig. 1 as being in direct contact with each other, a suitable edible sheet such as dried bean curds, paper sheet or film may be disposed therebetween in order to suppress the migration of food ingredients between these two types A and B.

The canned product 1 with the lid thereof taken off, which is shown by Fig. 2 also in a perspective view as partially broken away, comprises three types of food A, B, C prepared from substantially different materials, respectively, defining three layers arranged in the vertical direction thereof and each occupying one-third of the volume or capacity of the can 2. As an example, a mass of type A food may comprise a substantially homogeneous mixture of beef processed by a meat chopper, gelatinizer, vitamin preparation, minerals, beef extract, water etc., a mass of type B food may comprise a substantially homogeneous mixture of sole processed by a meat chopper, gelatinizer, vitamin preparation, minerals, fish extract, spinach processed by a food processor, water etc., and a mass of type C food may comprise a substantially homogeneous mixture of porgy processed by a meat chopper, gelatinizer, vitamin preparation, minerals, fish extract, water etc. In this embodiment also, the edible sheet of dried bean curds, paper sheet or the like may be used, if desired, to separate food of respective types A, B, C one from another.

The canned product 1, of which the contents are arranged as illustrated by Figs. 1 and 2, allows a pet to eat food of the respective types A, B, C in a selective order and thereby provides a variation in food being eaten by the pet. Such canned product 1 may comprise the respective types A, B, C of food arranged in a selective order within one and the same can. The container in which these various types of food are to be packed is not limited to a metallic can and it is also possible to use a plastic container or the like so far as such container is able to preserve its contents for a reasonable period. It should be understood here that the expression "food prepared from substantially different materials" used herein means that food of each type is different from that of the other type in particular ingredients such as meat, fish, vegetables, meat extract and various additives as well as particular mixture ratios.

According to the invention, two or more types of food prepared from substantially different materials are sorted within one and the same container so that these types of food may be given to the pet in an appropriate order and thereby the type of food may be varied from day to day. For the pet, the food type left to be eaten presents a taste different from that of the food type having been eaten and therefore the pet is free from satiation.

## Claims

1. A pet food packed in a hermetically sealed container (2), characterized in that two or more types of food (A,B,C) prepared from substantially different materials are sorted within one and the same container (2).

2. A pet food according to Claim 1, wherein said two or more types of food (A,B,C) are vertically layered within said container (2).

3. A pet food according to Claim 1, wherein said two or more types of food (A,B,C) are sorted side by side within said container (2).
